# DEMANDE DE BREVET EUROPEEN

(11) **EP 2 698 654 A1**
(43) Date de publication de la demande: **19.02.2014**
(21) Numéro de dépôt: 13180072.4
(22) Date de dépôt: 12.08.2013
(51) Int. Cl.: G02B 5/20, G02B 5/00

(54) **Dispositif de filtrage spectral dans les domaines visible et infrarouge**

(30) Priorité: 16.08.2012 FR 1257823
(71) Demandeur: Commissariat à l'Énergie Atomique et aux Énergies Alternatives, 75015 Paris (FR)
(72) Inventeur: Palanchoke, Ujwol, 38000 Grenoble (FR); Boutami, Salim, 38100 Grenoble (FR); Hazart, Jérôme, 38320 Eybens (FR)
(74) Mandataire: Ahner, Philippe

(57) **Abrégé**

Dispositif de filtrage spectral (100) comportant :
- un substrat (102) diélectrique ;
- un premier filtre (110) apte à réaliser un filtrage passe-bande dans le domaine visible et comportant une pluralité de premières nanostructures (118) régulièrement espacées les unes des autres et comportant chacune une portion diélectrique (122) disposée entre deux portions métalliques (120, 124) telles que l'une des deux portions métalliques soit disposée entre le substrat et la portion diélectrique ;
- un deuxième filtre (112) apte à réaliser un filtrage passe-bande dans le domaine infrarouge et comportant une pluralité de deuxièmes nanostructures (126) régulièrement espacées les unes des autres et comportant chacune une portion de matériau diélectrique (130) dont une seule face est disposée contre une portion de matériau métallique (128).

## Description

### DOMAINE TECHNIQUE

L'invention concerne le domaine des dispositifs de filtrage spectral, utilisés par exemple dans des dispositifs imageurs, ou capteurs d'images, et aptes à réaliser un filtrage dans les domaines visible et infrarouge, et notamment le domaine proche-infrarouge.

### ÉTAT DE LA TECHNIQUE ANTÉRIEURE

Les filtres optiques trouvent de nombreuses applications dans les domaines des systèmes optiques et photoniques, par exemple dans celui des dispositifs imageurs, ou capteurs d'images, des systèmes de communication par fibre optique, des systèmes d'affichage ou encore des systèmes de détection de gaz.

Les filtres optiques peuvent être de type passe-bande, coupe-bande, passe-bas ou encore passe-haut. De tels filtres peuvent fonctionner de manière réflective ou transmissive vis-à-vis de certaines gammes de longueurs d'ondes.

Les dispositifs imageurs fonctionnant dans le domaine visible font généralement appel à des filtres colorés transmissifs (transmettant chacun une gamme de longueurs d'ondes correspondant à la couleur du filtre) disposés sous la forme d'une matrice de Bayer afin que des photodiodes disposées en regard de ces filtres puissent réaliser une détection des couleurs rouge, vert et bleu au sein de différents pixels. Chaque photodétecteur, ou pixel, est associé à un de ces filtres. Différents types de filtres optiques peuvent être utilisés pour former cette matrice de Bayer, comme des résines colorées organiques dopées par un colorant ou pigments, ou des filtres multicouches en couches minces.

Ces dispositifs imageurs font généralement appel à un filtre coupe-infrarouge afin de réduire les perturbations engendrées par la lumière infrarouge au niveau des photodétecteurs destinés à réaliser une capture de la lumière dans le domaine visible.

Pour certaines applications telles que la surveillance diurne et nocturne, il est intéressant d'avoir un seul capteur pouvant réaliser une capture lumineuse dans les domaines visible (au cours de la journée) et infrarouge (pendant la nuit). Avec un tel capteur, il n'est toutefois plus possible d'utiliser de filtre coupe-infrarouge du fait que la lumière infrarouge doit être capturée par certains pixels du capteur. Le document EP 2 367 359 A2 décrit par exemple la réalisation d'un tel capteur qui comporte une matrice de Bayer modifiée incluant des pixels RGB (ou RVB pour Rouge-Vert-Bleu) destinés à la capture lumineuse dans le domaine visible et des pixels IR destinés à la capture lumineuse dans le domaine infrarouge.

Un tel dispositif a pour inconvénient de faire appel à un filtre spécifique pour filtrer les longueurs d'ondes à l'interface entre le domaine visible et la gamme infrarouge à capturer (filtre appelé « IR notch filter »). De plus, les filtres RGB ne filtrent pas la lumière infrarouge. Il est donc nécessaire de réaliser un traitement post-capture des données pour soustraire l'information liée à l'infrarouge se trouvant dans les données RGB capturées. Enfin, un tel dispositif est limité en termes de densité des pixels et de miniaturisation des filtres pouvant être atteintes.

### EXPOSÉ DE L'INVENTION

Un but de la présente invention est de proposer un dispositif de filtrage spectral apte à réaliser simultanément un filtrage dans les domaines visible et infrarouge, qui puisse être utilisé par exemple avec un unique capteur lumineux, qui permet d'obtenir une bonne séparation spectrale indépendamment de la polarisation de lumière reçue, et qui, lorsqu'il est utilisé au sein d'un dispositif imageur, permet d'obtenir directement l'information spectrale souhaitée sans avoir à réaliser un traitement post-capture des données.

Pour cela, la présente invention propose un dispositif de filtrage spectral comportant au moins :
- un substrat à base d'au moins un matériau diélectrique ;
- un premier filtre apte à réaliser un filtrage passe-bande dans le domaine visible et comportant une pluralité de premières nanostructures régulièrement espacées les unes des autres et disposées sur le substrat, chacune des premières nanostructures comportant une portion de matériau diélectrique disposée entre deux portions de matériau métallique telles que l'une des deux portions de matériau métallique soit disposée entre le substrat et la portion de matériau diélectrique ;
- un deuxième filtre apte à réaliser un filtrage passe-bande dans le domaine infrarouge et comportant une pluralité de deuxièmes nanostructures régulièrement espacées les unes des autres et disposées sur le substrat, chacune des deuxièmes nanostructures comportant une portion de matériau diélectrique dont une seule face est disposée contre une portion de matériau métallique.

Le dispositif de filtrage spectral selon l'invention permet de réaliser un filtrage de la lumière dans le domaine visible et le domaine infrarouge, indépendamment de l'état de polarisation de la lumière reçue. Cette indépendance du filtrage vis-à-vis de la polarisation de la lumière est obtenue grâce aux nanostructures régulièrement espacées les unes des autres disposées sur le substrat.

Le dispositif de filtrage spectral selon l'invention permet en outre de réaliser un filtrage dans les domaines visible et infrarouge au sein d'une unique structure de filtrage, par exemple apte à être intégrée avec un unique capteur lumineux, du fait que les nanostructures du premier et du deuxième filtre sont disposées sur un même substrat.

De plus, le dispositif de filtrage spectral selon l'invention ne nécessite pas l'utilisation d'un filtre supplémentaire pour stopper la lumière infrarouge au niveau du premier filtre car les premières nanostructures comportent chacune deux portions métalliques réalisant ce filtrage coupe-infrarouge.

Le dispositif de filtrage spectral selon l'invention a également pour avantage de pouvoir être réalisé à partir de matériaux compatibles avec les procédés de réalisation CMOS mis en oeuvre par exemple pour la réalisation d'un capteur d'images, et peut donc être réalisé via la mise en oeuvre d'étapes compatibles CMOS de même nature que celles mises en oeuvre pour réaliser par exemple le capteur d'images auquel le dispositif de filtrage spectral est destiné à être couplé.

Enfin, un tel dispositif de filtrage spectral présente également une tolérance vis-à-vis de l'angle d'incidence avec lequel la lumière entre dans le dispositif de filtrage spectral. Cette tolérance peut correspondre à une variation d'environ 30° par rapport à un angle d'incidence nul (ou environ 20° lorsque les filtres sont recouverts d'une couche de SiO₂ et que cet angle est mesuré dans cette couche de SiO₂).

Chacune des deuxièmes nanostructures comporte une portion de matériau diélectrique dont une seule face est disposée contre une portion de matériau métallique. Ainsi, chacune des deuxièmes nanostructures peut comporter une portion de matériau diélectrique disposée contre une unique portion de matériau métallique. Cette configuration des deuxièmes nanostructures du deuxième filtre permet notamment d'augmenter le taux de transmission du filtre et d'avoir une certaine insensibilité angulaire, cette insensibilité angulaire se retrouvant pour l'ensemble du dispositif de filtrage spectral.

Les filtres, et notamment le premier filtre et le deuxième filtre, du dispositif de filtrage spectral sont réalisés sur un même substrat et peuvent donc partager une même couche métallique pour former des portions de matériau métallique de ces filtres.

Les portions de matériau métallique des premières et deuxièmes nanostructures peuvent être à base d'aluminium et/ou avoir une épaisseur comprise entre environ 30 nm et 70 nm. Lorsque chacune des deuxièmes nanostructures comporte une portion de matériau diélectrique dont une seule face est disposée contre une portion de matériau métallique, ces portions de matériau métallique peuvent être composées d'aluminium. Dans ce cas, l'utilisation de deux portions d'aluminium dans les premières nanostructures permet de bien stopper les longueurs d'ondes du domaine infrarouge, notamment le proche-infrarouge, dans le premier filtre en raison de la forte absorption des longueurs d'ondes infrarouge par l'aluminium. De plus, du fait que dans ce cas, chacune des deuxièmes nanostructures ne comporte qu'une seule portion d'aluminium, l'absorption de l'aluminium vis-à-vis des longueurs d'ondes infrarouge dans le deuxième filtre est réduite.

Le deuxième filtre peut être apte à réaliser un filtrage passe-bande dans le domaine proche-infrarouge.

Les portions diélectriques des premières et deuxièmes nanostructures peuvent être à base de SiN et/ou les portions diélectriques des premières nanostructures peuvent avoir chacune une épaisseur comprise entre environ 75 nm et 100 nm et/ou les portions diélectriques des deuxièmes nanostructures peuvent avoir chacune une épaisseur comprise entre environ 250 nm et 325 nm.

Les portions de matériau métallique disposées contre les portions de matériau diélectrique des deuxièmes nanostructures peuvent être disposées entre le substrat et lesdites portions de matériau diélectrique. Dans une autre variante, il est possible que les portions de matériau diélectrique des deuxièmes nanostructures soient disposées entre le substrat et les portions de matériau métallique.

Les bandes spectrales (dans les domaines visible et infrarouge) destinées à être filtrées par les filtres du dispositif peuvent être configurées en choisissant les dimensions latérales des nanostructures du filtre, ainsi que leur disposition sur le substrat et leur espacement.

Une dimension de chacune des premières nanostructures qui est perpendiculaire à un plan principal du substrat, c'est-à-dire l'épaisseur de chacune des premières nanostructures, peut être inférieure à la plus petite longueur d'onde de la bande spectrale que le premier filtre est apte à laisser passer, et/ou une dimension de chacune des deuxièmes nanostructures qui est perpendiculaire au plan principal du substrat, c'est-à-dire l'épaisseur de chacune des deuxièmes nanostructures, peut être inférieure à la plus petite longueur d'onde de la bande spectrale que le deuxième filtre est apte à laisser passer.

Les premières nanostructures et/ou les deuxièmes nanostructures peuvent être chacune de forme parallélépipédique rectangle, éventuellement avec des coins arrondis.

Les premières nanostructures et/ou les deuxièmes nanostructures peuvent être disposées les unes à côté des autres sur le substrat, au sein de leur filtre respectif, sous la forme de rangées parallèles les unes par rapport aux autres.

Ainsi, les premières nanostructures et/ou les deuxièmes nanostructures peuvent être disposées les unes à côté des autres sur le substrat, au sein de leur filtre respectif, sous la forme d'une matrice rectangulaire ou en quinconce.

Lorsque les premières nanostructures sont chacune de forme parallélépipédique rectangle, le rapport entre une dimension, parallèle à un plan principal du substrat, d'un côté d'une première nanostructure et la distance entre les centres de deux premières nanostructures voisines disposées dans une même rangée peut être compris entre environ 0,4 et 0,95, et/ou dans lequel, lorsque les deuxièmes nanostructures sont chacune de forme parallélépipédique rectangle, le rapport entre une dimension, parallèle à un plan principal du substrat, d'un côté d'une deuxième nanostructure et la distance entre les centres de deux deuxièmes nanostructures voisines disposées dans une même rangée peut être compris entre environ 0,4 et 0,95.

La distance entre les centres de deux premières nanostructures voisines peut être inférieure à la plus petite longueur d'onde de la bande que le premier filtre est apte à laisser passer, et/ou la distance entre les centres de deux deuxièmes nanostructures voisines peut être inférieure à la plus petite longueur d'onde de la bande que le deuxième filtre est apte à laisser passer.

Le dispositif de filtrage spectral peut comporter en outre un troisième filtre apte à réaliser un filtrage passe-bande dans le domaine visible et pouvant comporter une pluralité de troisièmes nanostructures régulièrement espacées les unes des autres et disposées sur le substrat, chacune des troisièmes nanostructures pouvant comporter une portion de matériau diélectrique disposée entre deux portions de matériau métallique telle que l'une des deux portions métalliques soit disposée entre le substrat et la portion de matériau diélectrique, la bande de longueurs d'ondes que le troisième filtre est apte à laisser passer pouvant être différente de la bande de longueurs d'ondes que le premier filtre est apte à laisser passer.

Le dispositif de filtrage spectral peut comporter en outre un quatrième filtre apte à réaliser un filtrage passe-bande dans le domaine visible et pouvant comporter une pluralité de quatrièmes nanostructures régulièrement espacées les unes des autres et disposées sur le substrat, chacune des quatrièmes nanostructures pouvant comporter une portion de matériau diélectrique disposée entre deux portions de matériau métallique telle que l'une des deux portions métalliques soit disposée entre le substrat et la portion de matériau diélectrique, la bande de longueurs d'ondes que le quatrième filtre est apte à laisser passer pouvant être différente des bandes de longueurs d'ondes que les premier et troisième filtres sont aptes à laisser passer.

Dans un mode de réalisation avantageux, les bandes de longueurs d'ondes que les premier, troisième et quatrième filtres sont aptes à laisser passer peuvent correspondre aux couleurs rouge, vert et bleu.

Le dispositif de filtrage spectral peut comporter en outre une couche de matériau diélectrique recouvrant les nanostructures disposées sur le substrat. Une telle couche de matériau diélectrique forme un superstrat recouvrant les nanostructures du dispositif.

L'invention concerne également un dispositif imageur comportant au moins un dispositif de filtrage spectral tel que décrit précédemment, et peut comporter en outre une pluralité de photodétecteurs chacun disposé en regard d'un filtre du dispositif de filtrage spectral.

L'invention concerne également un procédé de réalisation d'un dispositif de filtrage spectral, comportant au moins les étapes de :
- réalisation, sur un substrat à base d'au moins un matériau diélectrique, d'une pluralité de premières nanostructures régulièrement espacées les unes des autres, chacune des premières nanostructures comportant une portion de matériau diélectrique disposée entre deux portions de matériau métallique telle que l'une des deux portions de matériau métallique soit disposée entre le substrat et la portion de matériau diélectrique, formant un premier filtre apte à réaliser un filtrage passe-bande dans le domaine visible,
- réalisation d'une pluralité de deuxièmes nanostructures régulièrement espacées les unes des autres et disposées sur le substrat, chacune des deuxièmes nanostructures comportant une portion de matériau diélectrique dont une seule face est disposée contre une portion de matériau métallique, formant un deuxième filtre apte à réaliser un filtrage passe-bande dans le domaine infrarouge.

Les premières nanostructures et les deuxièmes nanostructures peuvent être réalisées via la mise en oeuvre des étapes suivantes :
- dépôt, sur le substrat, d'un empilement de couches comportant une première couche métallique, une première couche diélectrique et une deuxième couche métallique,
- gravure d'une partie de la deuxième couche métallique recouvrant une partie de la première couche diélectrique destinée à former une partie des portions de matériau diélectrique des deuxièmes nanostructures,
- dépôt, au moins sur ladite partie de la première couche diélectrique, d'une deuxième couche de matériau diélectrique,
- gravure de la première couche métallique, de la première couche diélectrique et de la deuxième couche métallique telle que des portions restantes de ces couches forment les premières nanostructures,
- gravure de la première couche métallique, de ladite partie de la première couche diélectrique et de la deuxième couche de matériau diélectrique telle que des portions restantes de ces couches forment les deuxièmes nanostructures.

Un tel dispositif de filtrage spectral peut être réalisé via la mise en oeuvre d'étapes compatibles avec un procédé de type CMOS.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- les figures 1 et 2 représentent un dispositif de filtrage spectral, objet de la présente invention, selon un premier mode de réalisation ;
- les figures 3A, 3B et 4 représentent des exemples de configurations de nanostructures au sein d'un filtre du dispositif de filtrage spectral, objet de la présente invention ;
- les figures 5 à 7 représentent des réponses spectrales obtenues avec des filtres du dispositif de filtrage spectral, objet de la présente invention ;
- les figures 8 à 10 représentent des exemples de réalisation d'un dispositif imageur, objet de la présente invention ;
- les figures 11A à 11F représentent des étapes d'un procédé de réalisation d'un dispositif de filtrage spectral, objet de la présente invention ;
- les figures 12A et 12B représentent des réponses spectrales obtenues respectivement avec le deuxième filtre comportant des nanostructures de type IM et avec un filtre infrarouge comportant des nanostructures de type MIM, pour différents angles d'incidence.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

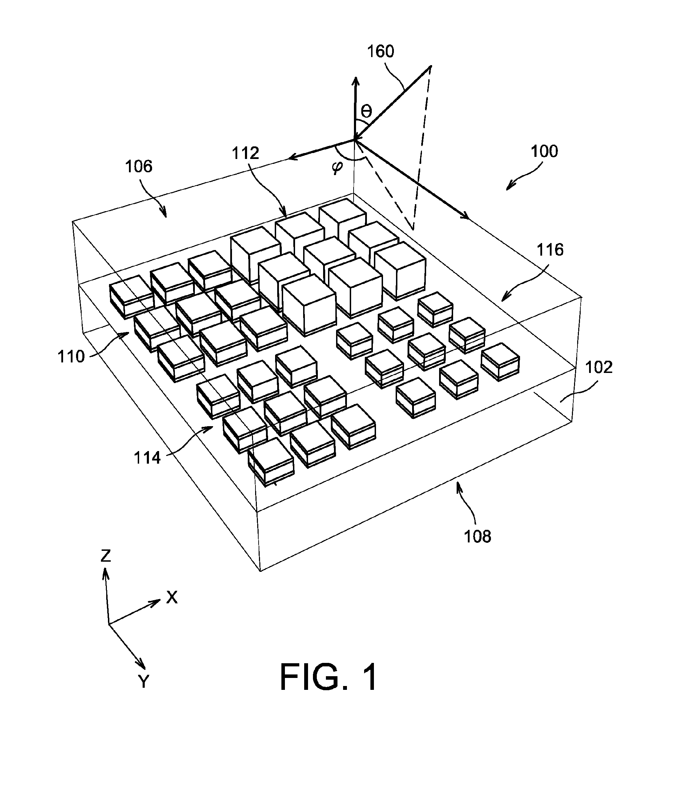

On se réfère tout d'abord à la figure 1 qui représente schématiquement une partie d'un dispositif de filtrage spectral 100 selon un premier mode de réalisation.

Le dispositif 100 comporte un substrat 102 à base d'un matériau diélectrique, par exemple du SiO₂. Le substrat 102 est transparent à la lumière filtrée par le dispositif 100.

Le dispositif 100 comporte également des nanostructures, également appelées nanostructures plasmoniques, réalisées sur le substrat 102 et destinées à former des filtres aptes à réaliser un filtrage spectral de la lumière reçue par le dispositif 100 via la génération de plasmons de surface. Le substrat 102 et les nanostructures sont ici recouverts par un superstrat 104 également à base d'un matériau diélectrique, par exemple un matériau similaire à celui du substrat 102, ici du SiO₂. Des matériaux autres que le SiO₂ peuvent être utilisés pour réaliser le substrat 102 et le superstrat 104, tels que des matériaux comprenant un faible indice de réfraction, par exemple compris entre environ 1 et 1,7, comme le MgF₂. Il serait également envisageable d'utiliser des matériaux de plus fort indice de réfraction si les nanostructures étaient redimensionnées par exemple telles que les dimensions des nanostructures soient augmentées proportionnellement au rapport entre ce fort indice de réfraction et l'indice du matériau actuel tel que celui du SiO₂.

Le superstrat 104 est transparent à la lumière reçue par le dispositif 100 et destinée à être filtrée. L'épaisseur du superstrat 104 peut être égale ou supérieure à celles des nanostructures les plus épaisses du dispositif 100. Sur l'exemple de la figure 1, le dispositif 100 est destiné à recevoir en entrée de la lumière à travers une face avant 106 du superstrat 104, cette lumière étant ensuite filtrée par les filtres formés par les nanostructures disposées sur le substrat 102. La lumière filtrée sort du dispositif 100 à travers une face arrière 108 du substrat 102 opposée à la face du substrat 102 sur laquelle les nanostructures sont réalisées.

Sur l'exemple de la figure 1, le dispositif 100 comporte quatre filtres 110, 112, 114 et 116 chacun formé par une pluralité de nanostructures régulièrement espacées les unes des autres. Les nanostructures des filtres 110 à 116 sont de dimensions différentes et espacées d'une distance différente dans chacun des filtres 110 - 116.

Chacun des filtres 110 à 116 est apte à réaliser un filtrage passe-bande dans une gamme de longueurs d'ondes différentes de celles destinées à être filtrées par les autres filtres. Chacun des trois filtres 110, 114 et 116 est apte à réaliser un filtrage passe-bande dans le domaine visible, tandis que le filtre 112 est apte à réaliser un filtrage passe-bande dans le domaine proche-infrarouge, c'est-à-dire dans la gamme des longueurs d'ondes comprises entre environ 750 nm et 1500 nm. Dans l'exemple décrit ici, le premier filtre 110 est apte à réaliser un filtrage passe-bande des longueurs d'ondes correspondant à la couleur bleu, c'est-à-dire présente une transmission comprise entre environ 40 % et 55 % pour les longueurs d'ondes comprises entre environ 400 nm et 500 nm. Le deuxième filtre 112 est apte à réaliser un filtrage passe-bande dans le domaine proche-infrarouge, c'est-à-dire présente une transmission supérieure à environ 50 %, et par exemple proche de 90 %, pour une partie des longueurs d'ondes du domaine proche-infrarouge. Le troisième filtre 114 est apte à réaliser un filtrage passe-bande des longueurs d'ondes correspondant à la couleur verte, c'est-à-dire présentant une transmission comprise entre environ 40 % et 55 % pour les longueurs d'ondes comprises entre environ 500 nm et 600 nm. Enfin, le quatrième filtre 116 est apte à réaliser un filtrage passe-bande des longueurs d'ondes correspondant à la couleur rouge, c'est-à-dire présentant une transmission comprise entre environ 40 % et 55 % pour les longueurs d'ondes comprises entre environ 600 nm et 700 nm.

Les quatre filtres 110 à 116 sont ici disposés sous la forme d'une matrice 2x2, correspondant par exemple à quatre filtres RVB-IR d'une matrice de Bayer modifiée telle que décrite par exemple dans le document EP 2 367 359 A2 (par rapport à une matrice 2x2 de filtres d'une matrice de Bayer classique, l'un des deux filtres de la couleur verte est remplacé par un filtre infrarouge).

Dans chacun des filtres 110 - 116, les nanostructures sont disposées régulièrement les unes à côté des autres sur le substrat 102 en formant un réseau régulier de nanostructures. Ainsi, sur l'exemple schématique de la figure 1, chacun des filtres 110 - 116 comporte neuf nanostructures espacées régulièrement les unes des autres et disposées sous la forme d'une matrice carrée 3 × 3. De manière générale, chaque filtre peut comporter entre environ 9 et 25 nanostructures en fonction de la taille du pixel du détecteur associé. Les dimensions latérales (selon les axes X et Y représentés sur la figure 1), la hauteur (dimension selon l'axe Z de la figure 1) et l'espacement entre les nanostructures de chacun des filtres 110 - 116 permettent de définir la gamme des longueurs d'ondes qui sont filtrées par chacun de ces filtres 110 - 116. Dans ce premier mode de réalisation, chacune des nanostructures des filtres 110 - 116 est de forme parallélépipédique rectangle et comporte, dans un plan parallèle au plan principal du substrat 102 (correspondant au plan (X,Y) sur la figure 1), une section de forme rectangulaire. Dans une variante de réalisation, les nanostructures pourraient comporter, dans un plan parallèle au plan principal du substrat 102, une section de forme rectangulaire comprenant des coins arrondis. Dans une autre variante, les nanostructures pourraient être de formes différentes, telles que des polyèdres, des cylindres, etc.

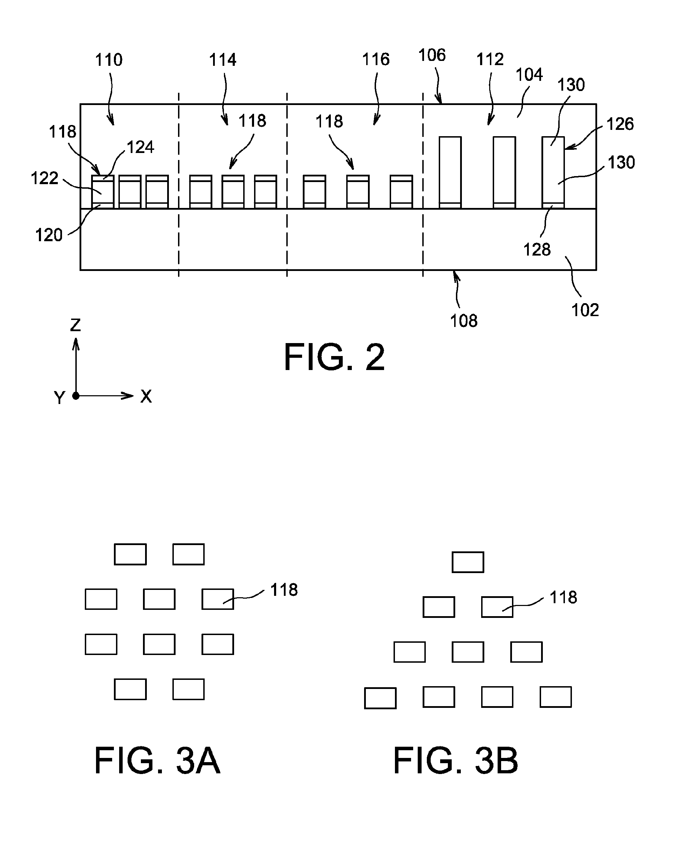

La figure 2 représente schématiquement une vue en coupe de profil des nanostructures des filtres 110 - 116 formées sur le substrat 102 (afin de simplifier leur représentation, les quatre filtres 110 - 116 sont représentés sur la figure 2 les uns à côté des autres bien qu'ils soient en réalité disposés sous la forme d'une matrice 2 × 2 comme représenté sur la figure 1). Les nanostructures des filtres 110, 114 et 116 aptes à réaliser un filtrage passe-bande dans le domaine visible sont appelées premières nanostructures, et les nanostructures du deuxième filtre 112 sont appelées deuxièmes nanostructures.

Chacune des premières nanostructures 118 des trois filtres 110, 114 et 116 comporte une première portion de matériau métallique 120 disposée sur le substrat 102, une portion de matériau diélectrique 122 et une deuxième portion de matériau métallique 124 telles que la portion de matériau diélectrique 122 soit disposée entre les deux portions de matériaux métalliques 120 et 124. Chaque première nanostructure 118 forme un plot de type MIM (« Metal-Insulator-Metal »). Il serait également possible de remplacer les matériaux métalliques par des matériaux électriquement conducteurs non-métalliques.

Les hauteurs, ou épaisseurs, des premières nanostructures 118 des filtres 110, 114 et 116 sont similaires d'un filtre à l'autre. De plus, sur l'exemple de la figure 2, les dimensions latérales (selon les axes X et Y) des premières nanostructures 118 sont similaires dans les trois filtres 110, 114 et 116. Ainsi, dans le dispositif 100, les différences entre les filtrages spectraux réalisés par les filtres 110, 114 et 116 sont obtenues en faisant varier l'espacement entre les premières nanostructures dans chacun des filtres 110, 114 et 116.

Les deuxièmes nanostructures 126 du deuxième filtre 112 sont structurellement différentes des premières nanostructures 118 des premiers filtres 110, 114 et 116. Ainsi, chacune des deuxièmes nanostructures 126 comporte une première portion de matériau métallique 128, par exemple similaire à la première portion de matériau métallique 120, sur laquelle est disposée une portion de matériau diélectrique 130 d'épaisseur différente de la portion de matériau diélectrique 122 des premières nanostructures 118. De plus, contrairement aux premières nanostructures 118, les deuxièmes nanostructures 126 ne comportent pas une deuxième portion de matériau métallique disposée sur la portion de matériau diélectrique 130. En variante, les deuxièmes nanostructures 126 pourraient chacune comporter la portion de matériau diélectrique 130 disposée directement sur le substrat 102 et recouverte par une portion de matériau métallique par exemple similaire à la portion de matériau métallique 128.

Les portions de matériau métallique 120, 124 et 128 des nanostructures sont ici à base d'aluminium et comportent chacune une épaisseur (dimension selon l'axe Z) comprise entre environ 30 nm et 70 nm. En variante, ces portions de matériau métallique 120, 124 et 128 pourraient être composées d'or et/ou d'argent. Les portions de matériau diélectrique 122 sont par exemple composées de SiN et comportent une épaisseur comprise entre environ 75 nm et 100 nm. Les portions de matériau diélectrique 130 sont par exemple composées de SiN et comportent une épaisseur comprise entre environ 250 nm et 325 nm. De manière avantageuse, les épaisseurs de chacune des nanostructures d'un filtre sont inférieures à la plus petite longueur d'onde de la bande spectrale que le filtre est apte à laisser passer. En variante, les portions de matériau diélectrique 122 et 130 peuvent être réalisées à base de SiN et/ou de TiO₂ et/ou de tout autre matériau diélectrique présentant un indice de réfraction compris entre environ 2 et 2,5.

Dans une variante de réalisation, les nanostructures d'un même filtre pourraient être disposées les unes à côté des autres d'une manière différente qu'une matrice carrée ou rectangulaire, par exemple sous une forme hexagonale comme représenté sur l'exemple de la figure 3A, ou encore sous une forme triangulaire comme représenté sur l'exemple de la figure 3B, ou sous toute autre forme permettant d'avoir un espacement régulier entre les nanostructures, et cela à la fois pour les filtres 110, 114 et 116 du domaine visible et pour le deuxième filtre 112 du domaine infrarouge.

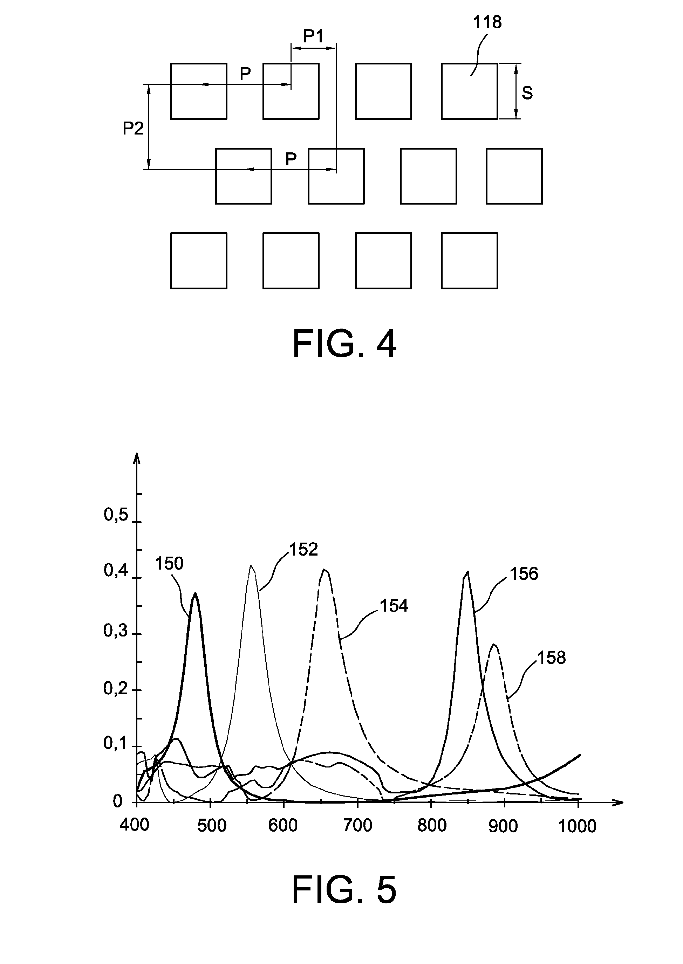

La figure 4 représente également un autre exemple de disposition des nanostructures au sein d'un des filtres du dispositif 100. Dans cet exemple, les nanostructures 118 (mais qui pourraient également être les deuxièmes nanostructures 126) sont disposées les unes à côté des autres sous la forme de rangées parallèles les unes par rapport aux autres. La distance P, appelée période, représente la distance entre les centres de deux nanostructures voisines disposées dans une même rangée. La distance P1 représente le décalage entre deux nanostructures disposées l'une au-dessus de l'autre (appartenant à deux rangées voisines) qui, lorsque P1 est nulle, sont alignées l'une au-dessus de l'autre (P1 a une valeur comprise entre 0 et P). P2 représente la distance entre les centres de deux nanostructures disposées l'une au-dessus de l'autre. Lorsque P1 est nulle ou égale à P, et que P2 est égale à P, les nanostructures sont alors disposées sous la forme d'une matrice carrée ou rectangulaire, comme sur l'exemple de la figure 1. Lorsque P1 est égale à 0,5.P et que P2 est égale à P, les nanostructures sont alors disposées en quinconce. De plus, la distance P est avantageusement choisie telle qu'elle soit inférieure à la plus petite longueur d'onde destinée à être filtrée par le filtre comportant les nanostructures espacées de cette distance P.

Dans une autre variante de réalisation du dispositif 100, les filtres 110, 114 et 116 peuvent être aptes à filtrer des bandes de longueurs d'ondes différentes des celles correspondant aux couleurs bleu, vert et rouge. En reprenant l'exemple de la figure 4, si l'on définit S comme étant la dimension d'un côté d'une des nanostructures (de section carrée ici), on peut définir un facteur de remplissage (« Fill Factor ») correspondant au rapport S/P. En choisissant ce facteur de remplissage compris entre 0,4 et 0,95, on peut réaliser des filtrages passe-bande avec des bandes de filtrage relativement étroites, comme par exemple entre environ 30 nm et 100 nm. De plus, il est possible que les nanostructures des différents filtres d'un dispositif de filtrage spectral soient réalisées avec un facteur de remplissage de valeur sensiblement similaire.

La figure 5 représente des réponses spectrales 150, 152, 154 et 156 (transmission obtenue en fonction de la longueur d'onde) obtenues respectivement à partir des filtres 110, 114, 116 et 112 du dispositif 100 en réalisant les nanostructures avec un facteur de remplissage égal à environ 0,7, des portions d'aluminium 120, 124 et 128 d'épaisseur égale à environ 50 nm, des portions de SiN 122 d'épaisseur égale à environ 100 nm, des portions de SiN 130 d'épaisseur égale à environ 300 nm, un substrat 102 et un superstrat 104 à base de SiO₂. Les premières nanostructures 118 du premier filtre 110 ont une dimension S égale à environ 165 nm et sont espacées d'une distance P égale à environ 240 nm. Les premières nanostructures 118 du troisième filtre 114 ont une dimension S égale à environ 205 nm et sont espacées d'une distance P égale à environ 290 nm. Les premières nanostructures 118 du quatrième filtre 116 ont une dimension S égale à environ 255 nm et sont espacées d'une distance P égale à environ 360 nm. Enfin, les deuxièmes nanostructures 126 du deuxième filtre 112 ont une dimension S égale à environ 365 nm et sont espacées d'une distance P égale à environ 500 nm. A titre de comparaison, une courbe 158 représentée sur la figure 5 correspond à la réponse spectrale obtenue pour un filtre sensiblement similaire au deuxième filtre 112, mais dont les portions de matériau diélectrique des nanostructures comportent non pas une seule face disposée contre une portion de matériau métallique, mais deux faces opposées disposées contre des portions de matériau métallique (structure MIM). On voit que la structure IM (avec une seule face des portions diélectriques disposée contre des portions de matériau métallique) des deuxièmes nanostructures du deuxième filtre 112 permet, par rapport à ce filtre infrarouge à nanostructures MIM, d'avoir un pic de transmission plus important.

Les valeurs des pics de transmission et des gammes de longueurs d'ondes filtrées ne sont pas les seuls paramètres qui déterminent les performances du dispositif de filtrage spectral 100. En fonction de l'application envisagée, il peut être souhaitable que la caractéristique spectrale du filtre ne change pas avec l'angle d'incidence avec lequel la lumière arrive sur la face d'entrée 106 du superstrat 104 (angle qui peut facilement varier de 20°, voir même de 30° lorsque le dispositif 100 est utilisé dans un dispositif imageur) et de l'état de polarisation. Ainsi, sur l'exemple de la figure 1, un faisceau lumineux 160 arrive sur la face avant 106 du superstrat 104 en formant un angle θ par rapport à la normale à cette face avant 106, et un angle φ par rapport à un axe d'alignement des nanostructures, ici l'axe X. θ est donc ici l'angle d'incidence par rapport à la normale à la surface, tandis que φ détermine la direction azimutale de l'incidence.

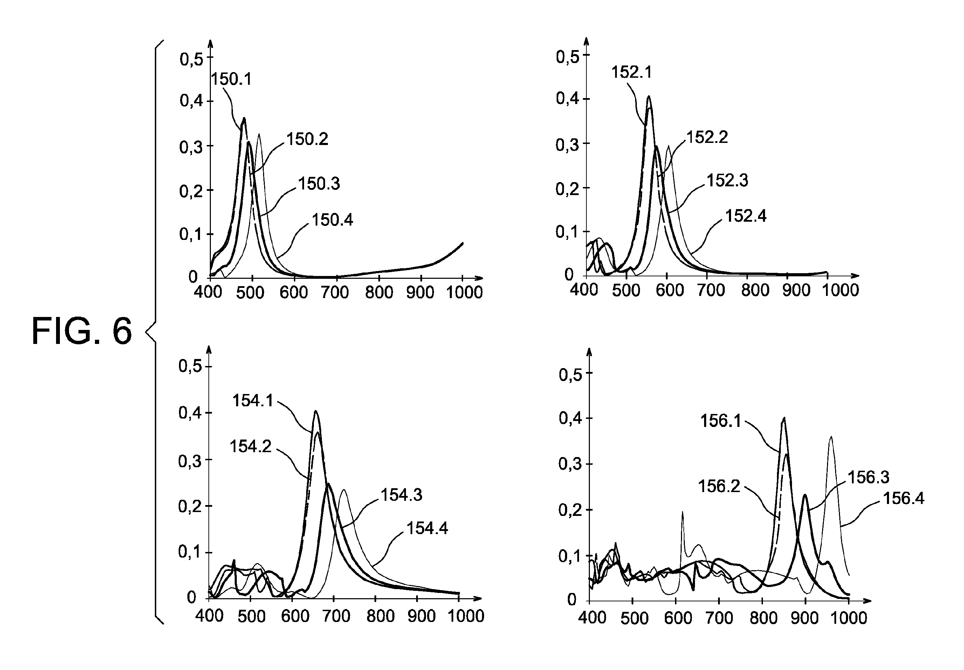

La figure 6 représente différentes réponses spectrales obtenues respectivement à partir des filtres 110, 114, 116 et 112 similaires à ceux ayant permis d'obtenir les réponses spectrales 150 - 156 représentées sur la figure 5. Les courbes 150.1, 152.1, 154.1 et 156.1 représentées sur la figure 6 correspondent aux réponses spectrales 150 - 156, et correspondant au cas où les angles θ et φ sont nuls.

Les courbes 150.2, 152.2, 154.2 et 156.2 correspondent aux réponses spectrales de ces mêmes filtres, mais avec des angles θ = 6° et φ = 15°. De même, les courbes 150.3, 152.3, 154.3 et 156.3 correspondent aux réponses spectrales de ces mêmes filtres, mais avec des angles θ = 13° et φ = 30°.

Enfin, les courbes 150.4, 152.4, 154.4 et 156.4 correspondent aux réponses spectrales de ces mêmes filtres, mais avec des angles θ = 20° et φ = 45°.

A partir de ces courbes, on voit donc que pour tous les filtres, une augmentation de l'angle d'incidence du faisceau lumineux sur la face d'entrée du dispositif se traduit par un décalage du pic de la réponse spectral vers la droite, c'est-à-dire vers des plus grandes valeurs de longueurs d'ondes.

Ainsi, lorsque le dispositif de filtrage spectral 100 est destiné à être utilisé dans un système susceptible de recevoir des rayons lumineux présentant un certain angle d'incidence vis-à-vis de sa face d'entrée, les caractéristiques des filtres (dimensions des nanostructures, facteur de remplissage, etc.) pourront être déterminées en tenant compte de la valeur de cet angle d'incidence. De plus, on voit également les structures des filtres permettent de compenser un certain angle d'incidence, c'est-à-dire tolèrent un certain angle d'incidence, par exemple jusqu'à θ=+/-20°, sans que leur réponse spectrale en soit significativement modifiée lorsque φ varie.

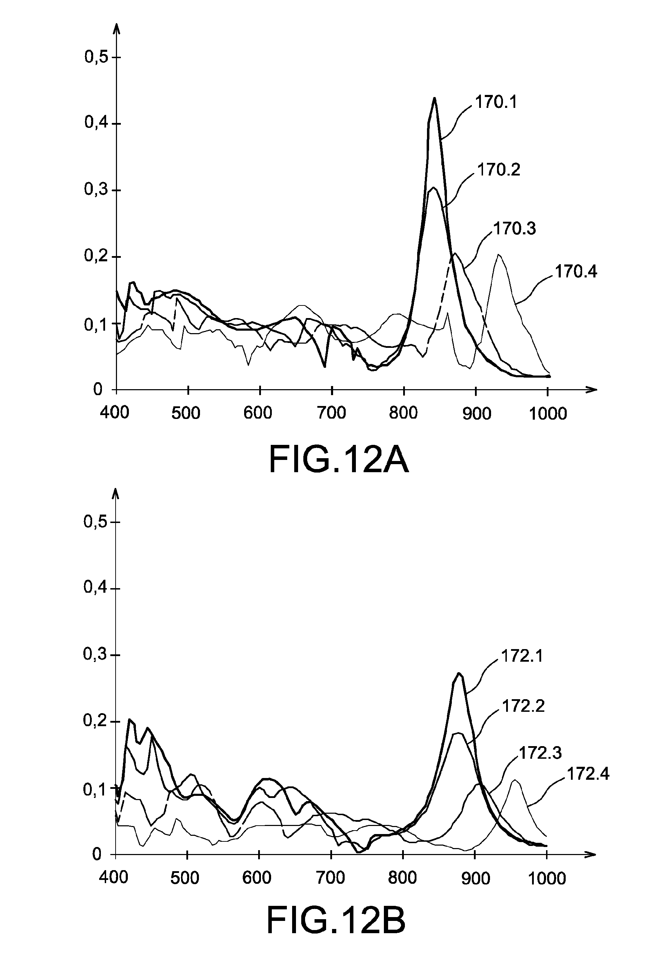

Les courbes 170.1, 170.2, 170.3 et 170.4 représentées sur la figure 12A correspondent au coefficient de transmission obtenu en fonction de la longueur d'onde pour le deuxième filtre 112 comportant les deuxièmes nanostructures de type IM (une seule face des portions diélectriques en contact avec des portions métalliques) pour les angles suivants :
courbe 170.1 : φ = 0° ; θ= 0° ;
courbe 170.2 : φ = 15° ; θ = 6° ;
courbe 170.3 φ = 30° ; θ = 13° ;
courbe 170.4 : φ = 45° ; θ = 20°.

On voit donc sur la figure 12A que pour ces valeurs d'angles φ et θ, le signal transmis reste détectable par rapport au bruit, c'est-à-dire au reste du signal en dehors de la plage de longueurs d'ondes où se trouve le pic de transmission, du fait que les pics de transmission ont des valeurs plus importantes que la transmission aux autres longueurs d'ondes.

A titre de comparaison, les courbes 172.1, 172.2, 172.3 et 172.4 représentées sur la figure 12B représentent le coefficient de transmission obtenue en fonction de la longueur d'onde pour un filtre sensiblement similaire au deuxième filtre 112, mais dont les portions de matériau diélectrique des nanostructures comportent non pas une seule face disposée contre une portion de matériau métallique, mais deux faces opposées disposées contre des portions de matériau métallique (structure MIM) pour les angles suivants :
courbe 172.1: φ = 0° ; θ = 0° ;
courbe 172.2 : φ = 15° ; θ = 6° ;
courbe 172.3 φ = 30° ; θ = 13° ;
courbe 172.4 : φ = 45° ; θ = 20°.

Contrairement au deuxième filtre 112, on voit ici que dès que φ et θ ne sont plus nuls, les pics de transmission obtenus sont du même niveau ou inférieurs au bruit, et qu'il n'est donc pas possible de retrouver le signal transmis correspondant à ce pic lorsque des nanostructures de type MIM sont utilisés pour de tels angles dans un filtre infrarouge.

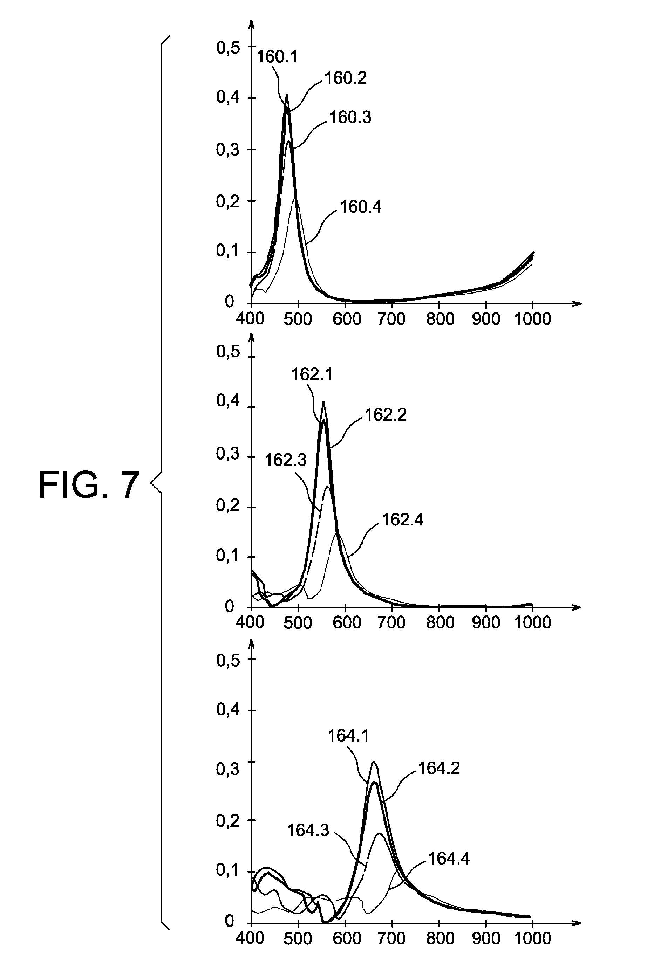

Les courbes 160.1, 162.1 et 164.1 représentées sur la figure 7 correspondent aux réponses spectrales de filtres analogues à ceux ayant permis d'obtenir les réponses spectrales 150.1, 152.1 et 154.1, excepté pour la valeur de P1 qui est ici égale à 0,5 P, et correspondant au cas où les angles θ et φ sont nuls. Les courbes 160.2, 162.2 et 164.2 correspondent aux réponses spectrales de ces mêmes filtres, mais avec des angles θ = 6° et φ = 15°. De même, les courbes 160.3, 162.3 et 164.3 correspondent aux réponses spectrales de ces mêmes filtres, mais avec des angles θ = 13° et φ = 30°. Enfin, les courbes 160.4, 162.4 et 164.4 correspondent aux réponses spectrales de ces mêmes filtres, mais avec des angles θ = 20° et φ = 45°.

Lors de la conception du dispositif de filtrage spectral, les valeurs des périodes, c'est-à-dire la distance entre les centres de deux nanostructures voisines disposées dans une même rangée d'un filtre, et des facteurs de remplissage des nanostructures dans chacun des filtres peuvent être déterminées à partir d'un premier et d'un deuxième diagrammes en trois dimensions obtenus par une simulation de type RCWA (« Rigorous Coupled Wave Analysis ») et donnant, pour une forme de nanostructure données (par exemple pour des nanostructures de section rectangulaires), respectivement la valeur du pic de transmission du filtre et la valeur de la longueur d'onde transmise au niveau de ce pic de transmission en fonction de la période des nanostructures et du facteur de remplissage des nanostructures du filtre. La valeur de la longueur d'onde du pic de transmission est tout d'abord choisie sur le deuxième diagramme, fournissant ainsi un ensemble de valeurs de la période et du facteur de remplissage pour lesquelles le pic de transmission du filtre se trouve au niveau de la longueur d'onde choisie. Cet ensemble de valeurs de la période et du facteur de remplissage est ensuite reporté sur le premier diagramme. On choisit ensuite, dans l'ensemble de valeurs reportées sur le premier diagramme, celles permettant d'obtenir la valeur du pic de transmission la plus adaptée, par exemple la valeur la plus élevée si l'on souhaite maximiser la transmission du filtre à cette longueur d'onde. Cette procédure est répétée pour chacun des filtres du dispositif de filtrage spectral.

Les diagrammes décrits précédemment et utilisés pour dimensionner le filtre proche infrarouge sont différents de ceux utilisés pour dimensionner les filtres du domaine visible en raison de la structure différente des deuxièmes nanostructures 126 par rapport à celle des premières nanostructures 118.

A titre d'exemple, pour des filtres comportant des nanostructures de forme parallélépipédique rectangle disposées en matrice carrée, un filtre de la couleur bleu peut être obtenu en réalisant des première nanostructures de ce filtre avec une période comprise entre environ 200 nm et 280 nm et un facteur de remplissage compris entre environ 0,6 et 0,78. De même, un filtre de la couleur verte peut être obtenu en réalisant des premières nanostructures de ce filtre avec une période comprise entre environ 280 nm et 330 nm et un facteur de remplissage compris entre environ 0,6 et 0,78. Un filtre de la couleur rouge peut être obtenu en réalisant les premières nanostructures de ce filtre une période comprise entre environ 340 nm et 410 nm et un facteur de remplissage compris entre environ 0,7 et 0,78. Enfin, un filtre en proche-infrarouge peut être obtenu en réalisant les deuxièmes nanostructures de filtre avec une période comprise entre environ 600 nm et 780 nm et un facteur de remplissage compris entre environ 0,65 et 0,725.

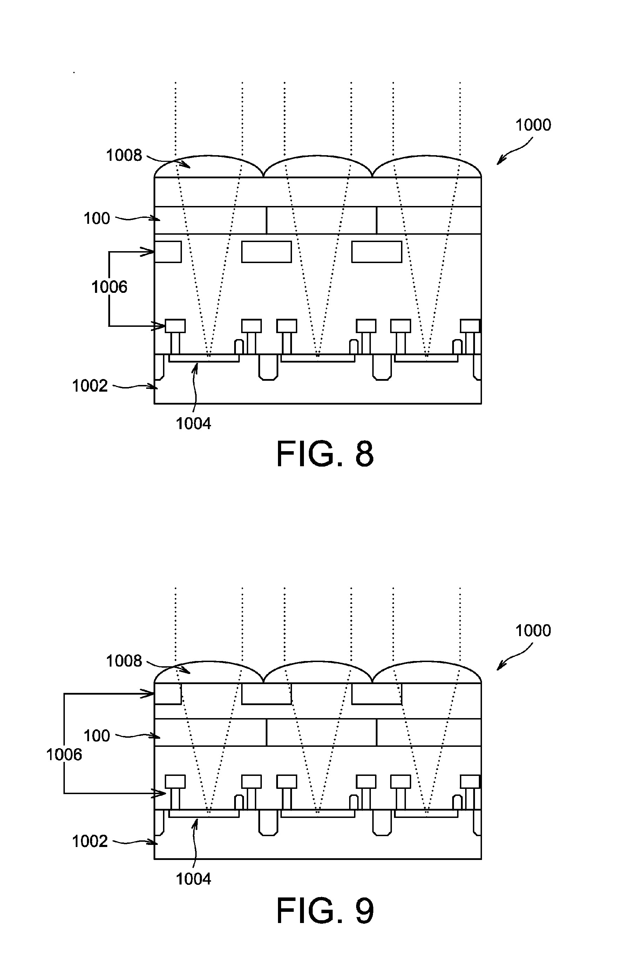

Le dispositif de filtrage spectral précédemment décrit est avantageusement utilisé au sein d'un dispositif imageur 1000 tel que représenté sur la figure 8.

Le dispositif imageur 1000 comporte un substrat 1002 dans lequel des photodétecteurs 1004, ici de type CMOS, sont réalisés. Des couches d'interconnexions métalliques 1006 sont réalisées au-dessus des photodétecteurs 1004 (le dispositif imageur 1000 est ici de type front-side). Le dispositif de filtrage spectral 100 est disposé au-dessus des niveaux d'interconnexions métalliques 1006, sous des microlentilles 1008. Pour des raisons de clarté de la figure, seuls deux niveaux d'interconnexions métalliques 1006 sont représentés sur la figure 8. Dans un tel dispositif imageur 1000, la lumière à capturer traverse tout d'abord les microlentilles 1008 qui focalisent les rayons lumineux vers les photodétecteurs 1004. Avant d'atteindre les photodétecteurs 1004, la lumière est filtrée par les filtres spectraux du dispositif 100. Chaque photodétecteur 1004 est par exemple disposé en regard d'un des filtres du dispositif de filtrage spectral 100.

Dans une variante de réalisation représentée sur la figure 9, il est possible que le dispositif de filtrage spectral ne soit pas disposé entre les microlentilles 1008 et le dernier niveau d'interconnexions métalliques 1006, mais au sein des niveaux d'interconnexions métalliques 1006, entre deux de ces niveaux.

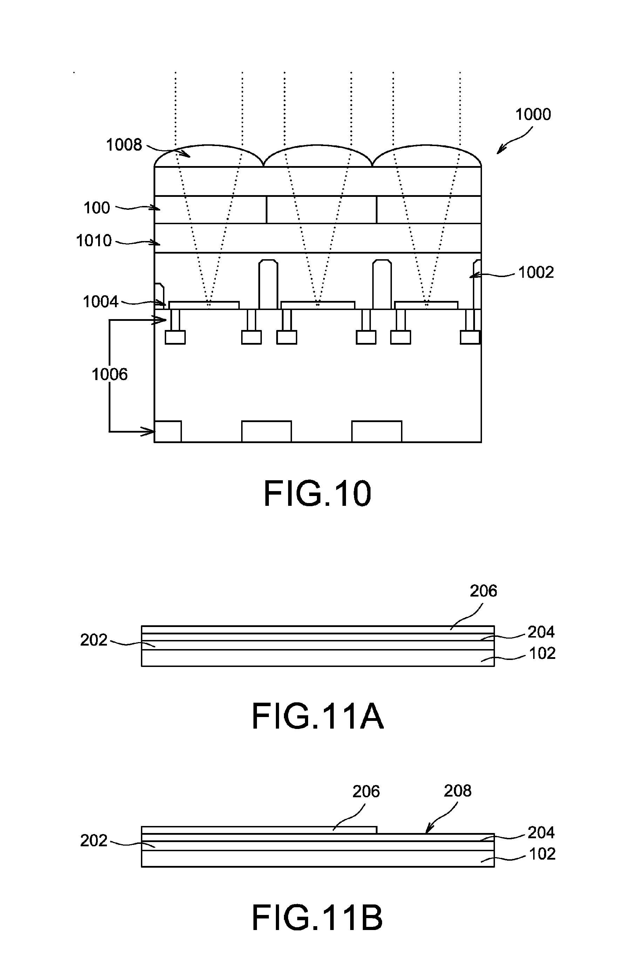

Une autre variante de réalisation du dispositif imageur 1000 est représentée sur la figure 10. Dans cette variante, le dispositif imageur 1000 est de type back-side, les niveaux d'interconnexions métalliques se trouvant au niveau de la face arrière du dispositif imageur 1000. Le dispositif de filtrage spectral est séparé des photodétecteurs 1004 par une couche diélectrique 1010 dont l'épaisseur peut être comprise entre 0 et environ 1 µm.

On décrit maintenant, en liaison avec les figures 11A à 11F, les étapes d'un procédé de réalisation du dispositif de filtrage spectral 100 correspondant ici à l'exemple de la réalisation précédemment décrit en liaison avec la figure 1.

Comme représenté sur la figure 11A, on réalise tout d'abord le dépôt, sur le substrat 102, d'un empilement de couches comportant une première couche métallique 202, une première couche diélectrique 204 et une deuxième couche métallique 206. Dans cet exemple de réalisation, les deux couches métalliques 202 et 206 sont composées d'aluminium, et la couche diélectrique 204 est composée de SiN. Les épaisseurs de ces couches sont choisies telles qu'elles correspondent aux épaisseurs souhaitées des portions 120, 122 et 124, par exemple celles précédemment décrite pour le dispositif 100 de la figure 1.

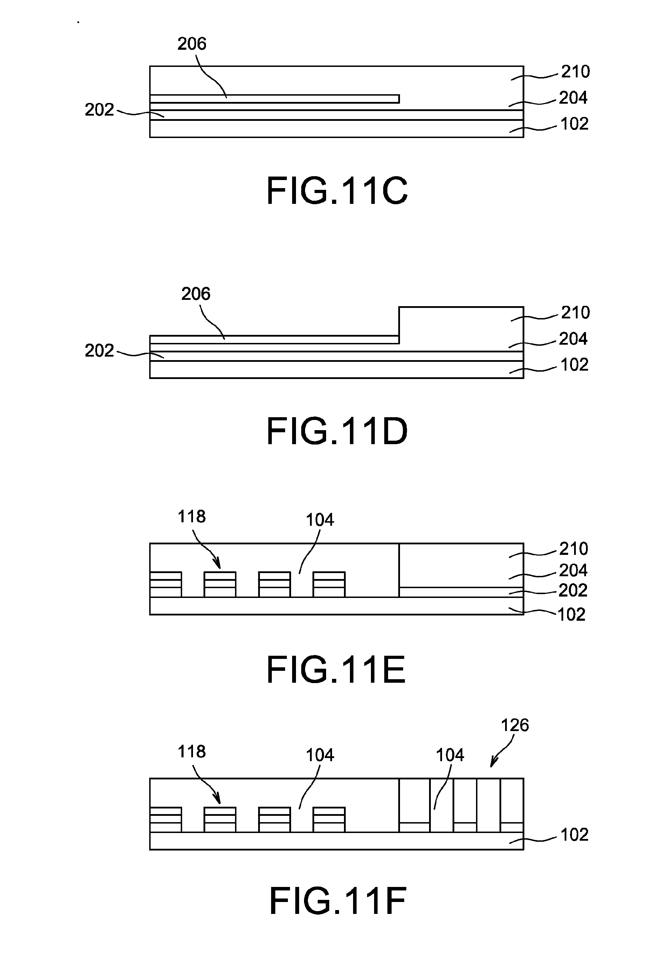

Comme représenté sur la figure 11B, on réalise une gravure d'une partie de la deuxième couche métallique 206 qui recouvre une partie 208 de la première couche diélectrique 204 destinée à former une partie des portions de matériau diélectrique des deuxièmes nanostructures 126. On réalise ensuite un dépôt d'une deuxième couche de matériau diélectrique 210, ce matériau diélectrique étant destiné à former, avec celui de la première couche diélectrique 204, les portions diélectriques 130 des deuxièmes nanostructures 126. La deuxième couche diélectrique 210 est ici à base de SiN, similaire au matériau de la première couche diélectrique 204 (figure 11C). Le matériau de la deuxième couche diélectrique 210 est ici de même nature que le matériau de la couche 204 et se confond donc avec la partie 208 de la couche 204 précédemment révélée. La deuxième couche de matériau diélectrique 210 est ensuite planarisée jusqu'à atteindre l'épaisseur souhaitée des portions diélectriques 130. La partie de cette deuxième couche de matériau diélectrique 210 qui recouvre la partie restante de la deuxième couche métallique 206 est ensuite supprimée (voir figure 11D).

Des étapes de photolithographie et gravure de la deuxième couche métallique 206, de la première couche diélectrique 204 et de la première couche métallique 202 sont ensuite mises en oeuvre telles que des portions restantes de ces couches forment les premières nanostructures 118 des filtres 110, 114 et 116.

Un dépôt de diélectrique, ici du SiO₂, est ensuite mis en oeuvre. Ce diélectrique est ensuite planarisé avec arrêt sur la portion restante de la deuxième couche de matériau diélectrique 210, formant ainsi la partie du superstrat 104 recouvrant les filtres 110, 114 et 116 (figure 11E).

Le deuxième filtre 112 est ensuite achevé via des étapes de photolithographie et gravure à travers la portion restante de la deuxième couche de matériau diélectrique 210, la partie 208 de la première couche diélectrique et la première couche métallique 202, telles que des portions restantes de ces couches 202, 204 et 210 forment les deuxièmes nanostructures 126. Le superstrat 104 est ensuite achevé via un dépôt de diélectrique (SiO₂) sur les deuxièmes nanostructures 126, avec de nouveau une planarisation avec arrêt sur le sommet des nanostructures 126 (figure 11F).

L'invention est avantageusement utilisé pour la réalisation de :
- dispositifs imageurs, par exemple dans le domaine des caméras de sécurité ;
- dispositifs d'affichage numérique (par exemple pour la réalisation des filtres de couleurs primaires, ou pour réaliser une séparation de couleurs du côté arrière d'un afficheur LCD);
- système imageur hyperspectral ;
- système de projection couleur.

## Revendications

1. Dispositif de filtrage spectral (100) comportant au moins :
- un substrat (102) à base d'au moins un matériau diélectrique ;
- un premier filtre (110) apte à réaliser un filtrage passe-bande dans le domaine visible et comportant une pluralité de premières nanostructures (118) régulièrement espacées les unes des autres et disposées sur le substrat (102), chacune des premières nanostructures (118) comportant une portion de matériau diélectrique (122) disposée entre deux portions de matériau métallique (120, 124) telles que l'une des deux portions de matériau métallique (120) soit disposée entre le substrat (102) et la portion de matériau diélectrique (122) ;
- un deuxième filtre (112) apte à réaliser un filtrage passe-bande dans le domaine infrarouge et comportant une pluralité de deuxièmes nanostructures (126) régulièrement espacées les unes des autres et disposées sur le substrat (102), chacune des deuxièmes nanostructures (126) comportant une portion de matériau diélectrique (130) dont une seule face est disposée contre une portion de matériau métallique (128).

2. Dispositif de filtrage spectral (100) selon la revendication 1, dans lequel les portions de matériau métallique (120, 124, 128) des premières et deuxièmes nanostructures (118, 126) sont à base d'aluminium et/ou ont une épaisseur comprise entre environ 30 nm et 70 nm.

3. Dispositif de filtrage spectral (100) selon l'une des revendications précédentes, dans lequel les portions diélectriques (122, 130) des premières et deuxièmes nanostructures (118, 126) sont à base de SiN, et/ou les portions diélectriques (122) des premières nanostructures (118) ont chacune une épaisseur comprise entre environ 75 nm et 100 nm et/ou les portions diélectriques (130) des deuxièmes nanostructures (126) ont chacune une épaisseur comprise entre environ 250 nm et 325 nm.

4. Dispositif de filtrage spectral (100) selon l'une des revendications précédentes, dans lequel les portions de matériau métallique (128) disposées contre les portions de matériau diélectrique (130) des deuxièmes nanostructures (126) sont disposées entre le substrat (102) et lesdites portions de matériau diélectrique (130).

5. Dispositif de filtrage spectral (100) selon l'une des revendications précédentes, dans lequel une dimension de chacune des premières nanostructures (118) qui est perpendiculaire à un plan principal du substrat (102) est inférieure à la plus petite longueur d'onde de la bande spectrale que le premier filtre (110) est apte à laisser passer, et/ou une dimension de chacune des deuxièmes nanostructures (126) qui est perpendiculaire au plan principal du substrat (102) est inférieure à la plus petite longueur d'onde de la bande spectrale que le deuxième filtre (112) est apte à laisser passer.

6. Dispositif de filtrage spectral (100) selon l'une des revendications précédentes, dans lequel les premières nanostructures (118) et/ou les deuxièmes nanostructures (126) sont chacune de forme parallélépipédique rectangle.

7. Dispositif de filtrage spectral (100) selon l'une des revendications précédentes, dans lequel les premières nanostructures (118) et/ou les deuxièmes nanostructures (126) sont disposées les unes à côté des autres sur le substrat (102), au sein de leur filtre respectif (110, 112), sous la forme de rangées parallèles les unes par rapport aux autres.

8. Dispositif de filtrage spectral (100) selon la revendication 7, dans lequel les premières nanostructures (118) et/ou les deuxièmes nanostructures (126) sont disposées les unes à côté des autres sur le substrat (102), au sein de leur filtre respectif (110, 112), sous la forme d'une matrice rectangulaire ou en quinconce.

9. Dispositif de filtrage spectral (100) selon l'une des revendications 7 ou 8, dans lequel, lorsque les premières nanostructures (118) sont chacune de forme parallélépipédique rectangle, le rapport entre une dimension, parallèle à un plan principal du substrat (102), d'un côté d'une première nanostructure (118) et la distance entre les centres de deux premières nanostructures (118) voisines disposées dans une même rangée est compris entre environ 0,4 et 0,95, et/ou dans lequel, lorsque les deuxièmes nanostructures (126) sont chacune de forme parallélépipédique rectangle, le rapport entre une dimension, parallèle à un plan principal du substrat (102), d'un côté d'une deuxième nanostructure (126) et la distance entre les centres de deux deuxièmes nanostructures (126) voisines disposées dans une même rangée est compris entre environ 0,4 et 0,95.

10. Dispositif de filtrage spectral (100) selon l'une des revendications précédentes, dans lequel la distance entre les centres de deux premières nanostructures (118) voisines est inférieure à la plus petite longueur d'onde de la bande que le premier filtre (110) est apte à laisser passer, et/ou la distance entre les centres de deux deuxièmes nanostructures (126) voisines est inférieure à la plus petite longueur d'onde de la bande que le deuxième filtre (112) est apte à laisser passer.

11. Dispositif de filtrage spectral (100) selon l'une des revendications précédentes, comportant en outre un troisième filtre (114) apte à réaliser un filtrage passe-bande dans le domaine visible et comportant une pluralité de troisièmes nanostructures (118) régulièrement espacées les unes des autres et disposées sur le substrat (102), chacune des troisièmes nanostructures (118) comportant une portion de matériau diélectrique (122) disposée entre deux portions de matériau métallique (120, 124) telle que l'une des deux portions métalliques (120) soit disposée entre le substrat (102) et la portion de matériau diélectrique (122), et dans lequel la bande de longueurs d'ondes que le troisième filtre (114) est apte à laisser passer est différente de la bande de longueurs d'ondes que le premier filtre (110) est apte à laisser passer.

12. Dispositif de filtrage spectral (100) selon la revendication 11, comportant en outre un quatrième filtre (116) apte à réaliser un filtrage passe-bande dans le domaine visible et comportant une pluralité de quatrièmes nanostructures (118) régulièrement espacées les unes des autres et disposées sur le substrat (102), chacune des quatrièmes nanostructures (118) comportant une portion de matériau diélectrique (122) disposée entre deux portions de matériau métallique (120, 124) telle que l'une des deux portions métalliques (120) soit disposée entre le substrat (102) et la portion de matériau diélectrique (122), et dans lequel la bande de longueurs d'ondes que le quatrième filtre (116) est apte à laisser passer est différente des bandes de longueurs d'ondes que les premier (110) et troisième filtres (114) sont aptes à laisser passer.

13. Dispositif de filtrage spectral (100) selon la revendication 12, dans lequel les bandes de longueurs d'ondes que les premier (110), troisième (114) et quatrième filtres (116) sont aptes à laisser passer correspondent aux couleurs rouge, vert et bleu.

14. Dispositif de filtrage spectral (100) selon l'une des revendications précédentes, comportant en outre une couche de matériau diélectrique (104) recouvrant les nanostructures (118, 126) disposées sur le substrat (102).

15. Dispositif imageur (1000) comportant au moins un dispositif de filtrage spectral (100) selon l'une des revendications précédentes, et comportant en outre une pluralité de photodétecteurs (1004) chacun disposé en regard d'un filtre (110, 112, 114, 116) du dispositif de filtrage spectral (100).

16. Procédé de réalisation d'un dispositif de filtrage spectral (100), comportant au moins les étapes de :
- réalisation, sur un substrat (102) à base d'au moins un matériau diélectrique, d'une pluralité de premières nanostructures (118) régulièrement espacées les unes des autres, chacune des premières nanostructures (118) comportant une portion de matériau diélectrique (122) disposée entre deux portions de matériau métallique (120, 124) telle que l'une des deux portions de matériau métallique (120) soit disposée entre le substrat (102) et la portion de matériau diélectrique (122), formant un premier filtre (110) apte à réaliser un filtrage passe-bande dans le domaine visible,
- réalisation d'une pluralité de deuxièmes nanostructures (126) régulièrement espacées les unes des autres et disposées sur le substrat (102), chacune des deuxièmes nanostructures (126) comportant une portion de matériau diélectrique (130) dont une seule face est disposée contre une portion de matériau métallique (128), formant un deuxième filtre (112) apte à réaliser un filtrage passe-bande dans le domaine infrarouge.

17. Procédé selon la revendication 16, dans lequel les premières nanostructures (118) et les deuxièmes nanostructures (126) sont réalisées via la mise en oeuvre des étapes suivantes :
- dépôt, sur le substrat (102), d'un empilement de couches comportant une première couche métallique (202), une première couche diélectrique (204) et une deuxième couche métallique (206),
- gravure d'une partie de la deuxième couche métallique (206) recouvrant une partie (208) de la première couche diélectrique (204) destinée à former une partie des portions de matériau diélectrique (130) des deuxièmes nanostructures (126),
- dépôt, au moins sur ladite partie (208) de la première couche diélectrique (204), d'une deuxième couche de matériau diélectrique (210),
- gravure de la première couche métallique (202), de la première couche diélectrique (204 et de la deuxième couche métallique (206) telle que des portions restantes de ces couches (202, 204, 206) forment les premières nanostructures (118),
- gravure de la première couche métallique (202), de ladite partie (208) de la première couche diélectrique (204) et de la deuxième couche de matériau diélectrique (210) telle que des portions restantes de ces couches (202, 204, 210) forment les deuxièmes nanostructures (126).
